# EUROPÄISCHE PATENTSCHRIFT

(11) **EP 1 206 376 B1**
(45) Veröffentlichungstag und Bekanntmachung des Hinweises auf die Patenterteilung: **27.04.2005**
(21) Anmeldenummer: 00965788.3
(22) Anmeldetag: 24.08.2000
(51) Int. Cl.: B60R 21/20

(54) **AIRBAGVORRICHTUNG MIT GESTEUERTER ABDECKEINRICHTUNG**
AIRBAG SYSTEM WITH CONTROLLED COVER DEVICE
DISPOSITIF D'AIRBAG AVEC DISPOSITIF DE COUVERTURE COMMANDE

(30) Priorität: 24.08.1999 DE 29914767 U; 02.09.1999 DE 29915423 U
(43) Veröffentlichungstag der Anmeldung: 22.05.2002
(73) Patentinhaber: Volkswagen Aktiengesellschaft, 38436 Wolfsburg (DE)
(72) Erfinder: MÜLLER, Olaf, 65428 Rüsselsheim (DE)
(74) Vertreter: Lindner, Manfred Klaus, Dipl.-Phys.
(86) Internationale Anmeldenummer: PCT/DE2000/002892
(87) Internationale Veröffentlichungsnummer: WO 2001/014172

(56) Entgegenhaltungen:
- EP-A- 0 867 346
- EP-A- 1 004 481
- DE-A- 19 757 435
- DE-U- 29 721 644
- DE-U- 29 914 924

## Beschreibung

Die Erfindung betrifft eine Airbagvorrichtung nach dem Oberbegriff des Anspruchs 1.

Eine solche Airbagvorrichtung ist aus der EP-A-0 867 346 bekannt.

Die auf den vorliegenden Anmelder/Inhaber zurückgehenden älteren deutschen Patentanmeldungen 197 12 782.7, 197 26 878.1 und 197 33 896.8, europäische Patentanmeldung 98 10 55 51.0, internationale Patentanmeldung PCT/DE 99/01564 sowie Gebrauchsmusteranmeldungen 298 08 317.5, 298 09 554.8, 298 19 165.2, 298 20 722.2, 299 05 000.9, 299 05 919.7, 299 07 102.2, 299 08 946.0, 299 10 059.6 und 299 13 628 befassen sich allgemein mit einer Airbagvorrichtung sowie einem Auslöseverfahren dafür. Die vorliegende Erfindung betrifft Verbesserungen sämtlicher in der früheren Anmeldung behandelten Techniken und Ausführungsbeispiele insbesondere hinsichtlich der Bauart der Airbagvorrichtung und Auslösesteuerung und im speziellen eine Ausgestaltung zur Steuerung einer Airbagklappe, wozu der vollständige Offenbarungsgehalt dieser älteren Anmeldungen hiermit durch die Bezugnahmen vollumfänglich in die vorliegenden Unterlagen aufgenommen ist.

Solche Airbagklappen werden mittels einer separaten Mechanik in das Modulgehäuse zurückgezogen, bevor der Airbag aus der Armaturentafel austritt. Sinn und Zweck von Airbagklappen, die in das Modul hineingezogen werden, wurden vom vorliegenden Erfinder z.B. in der älteren Europäischen Patentanmeldung EP 0867346 A 1 umfassend beschrieben, was in die vorliegenden Unterlagen hiermit durch Bezugnahme zur Vermeidung von bloßen Wiederholungen vollumfänglich aufgenommen ist. Die grundsätzliche Idee der Erfindung ist, daß nicht mit dem Airbag direkt, sondern über Hilfsmittel die jeweilige Verkleidung entfernt wird. Hierdurch wird erreicht, daß der Airbag mit niedrigerem Druck nicht aggressiv und damit nicht verletzungsgefährdent austreten kann.

Mit der vorliegenden Erfindung wird das Ziel verfolgt und mit einer Airbagvorrichtung gemäß dem Anspruch 1 erreicht, weitere vorteilhafte Ausgestaltungsmöglichkeiten einer Airbagvorrichtung gemäß den und bezüglich der vorstehend genannten älteren Anmeldungen zu schaffen. Insbesondere werden weitere vorteilhafte Mechanismen und -antriebe zur Öffnung von Airbagklappen geschaffen.

Soweit in den vorliegenden Unterlagen zur Erläuterung der Erfindung auf eine Beifahrer-Airbagvorrichtung Bezug genommen wird, die als Airbagmodul mit rückziehbarem Airbagdeckel ausgestaltet ist, dient dies nur der exemplarischen Darstellung. Die Erfindung ist nicht auf Anwendungen bei Beifahrer-Airbaavorrichtungen beschränkt, sondern kann auch bei anderen Airbagvorrichtungen als Beifahrer-Airbagvorrichtungen mit Vorteil eingesetzt werden.

Vorzugsweise ist bei der Airbagvorrichtung ferner vorgesehen, dass die Gaserzeugungseinrichtungen einen Airbag-Gasgenerator enthalten, und dass ein Airbagmodul enthalten ist, das wenigstens den Airbag-Gasgenerator und den Gassack enthält. Dabei kann das Airbagmodul ein Gehäuse enthalten, das zumindest im wesentlichen aus einem Strangpreßprofil besteht. Alternativ oder zusätzlich kann vorgesehen sein, dass die wenigstens eine Abdeckeinrichtung im Airbagmodul integriert oder damit kombiniert ist oder Bestandteil einer Fahrzeuginnenverkleidung und an das Airbagmodul angeschlossen ist.

Eine andere bevorzugte Ausgestaltung der Airbagvorrichtung besteht darin, dass die Gaserzeugungseinrichtungen einen Antriebs-Gasgenerator enthalten, der mit den Mechanikeinrichtungen verbunden ist. Eine Weiterbildung davon besteht darin, dass der Antriebs-Gasgenerator separat vom Airbagmodul ausgebildet und an oder getrennt von letzterem angeordnet ist.

Weiterhin ist es bevorzugt, wenn die Mechanikeinrichtungen eine Zwangssteuerung zum koordinierten Antrieb mehrerer Abdeckeinrichtungen enthalten.

Ferner kann vorgesehen sein, dass die Mechanikeinrichtungen zur Bewegungsübertragung Seile, Gestänge oder Gewebe enthalten.

Weitere vorzugsweise und/oder vorteilhafte Ausgestaltungen der Erfindung ergeben sich aus den abhängigen Ansprüchen und deren Kombinationen sowie insbesondere auch aus den gesamten vorliegenden Unterlagen, in denen weitere kombiniert oder alleine schutzfähige und schutzwürdige Ausgestaltungen offenbart sind.

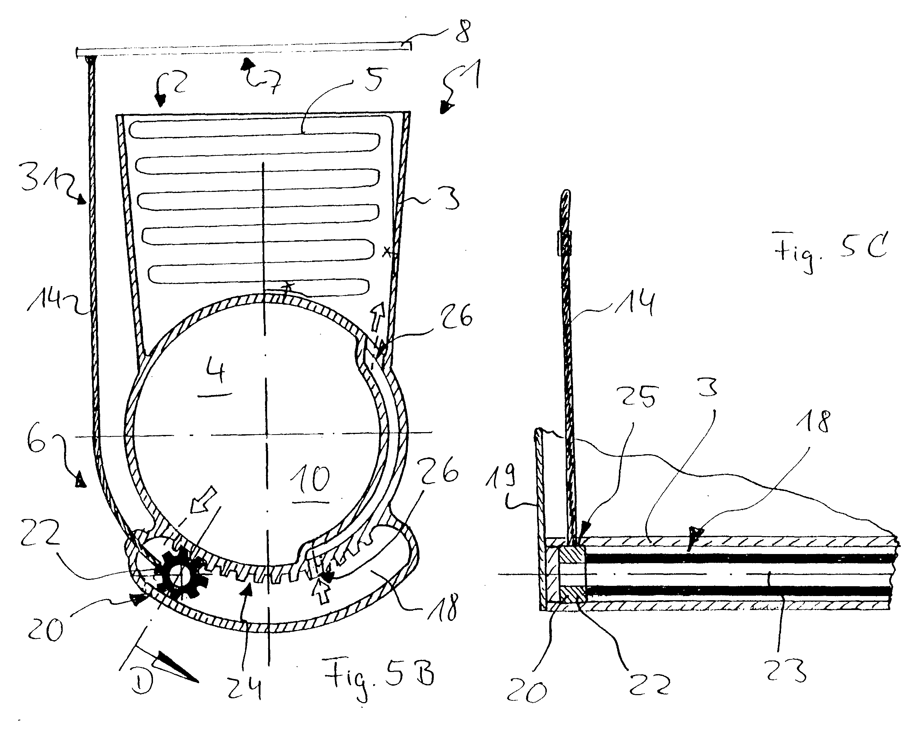

Anhand der nachfolgend beschriebenen und in den Zeichnungen dargestellten Ausführungsund Anwendungsbeispiele wird die Erfindung näher erläutert, wobei das einzige Ausführungsbeispiel der Erfindung in den Figuren 5B und 5C gezeigt wird. Bei den Ausführungsformen gemäß alle anderen Figuren handelt es nicht um Ausführungsarten der Erfindung, sondern lediglich um Beispiele, die das Verständnis der Erfindung erleichtern.
- Fig. 1 und 2: schematisch ein erstes Beispiel einer Airbagvorrichtung vor (Fig. 1) und nach (Fig. 2) einer Auslösung in einer Schnittansicht,
- Fig. 3 und 4: schematisch ein zweites Beispiel einer Airbagvorrichtung vor (Fig. 3) und nach (Fig. 4) einer Auslösung in einer Schnittansicht,
- Fig. 5A: eine schematische vergrößerte Ansicht des zweiten Beispiels in der Fig. 5 gemäß der Schnittlinie A - A,
- Fig. 5B und 5C: schematisch ein erstes Ausführungsbeispiel einer Airbagvorrichtung gemäß der Erfindung in einer Schnittansicht (Fig. 5B) und in einer geschnittenen und vergrößerten Teilansicht (Fig. 5C) gemäß der Schnittlinie D - D in der Fig. 5B,
- Fig. 6 und 7: schematisch ein drittes Beispiel einer Airbagvorrichtung vor (Fig. 6) und nach (Fig. 7) einer Auslösung in einer Schnittansicht,
- Fig. 8: eine schematische Ansicht des dritten Beispiels in den Fig. 6 und 7 gemäß der Schnittlinie C - C, einschließlich der Schnittangaben B - B, die zusätzlich die Relation der Fig. 8 zu den Fig. 6 und 7 bezeichnen,
- Fig. 9 und 10: schematisch ein viertes Beispiel einer Airbagvorrichtung vor (Fig. 9) und nach (Fig. 10) einer Auslösung in einer Schnittansicht,
- Fig. 11: schematisch und vergrößert eine erste Modifikation für eine Airbagvorrichtung in einer Seitenansicht,
- Fig. 12 und 13: schematisch ein fünftes Beispiel einer Airbagvorrichtung vor (Fig. 12) und nach (Fig. 13) einer Auslösung in einer Schnittansicht,
- Fig. 14: schematisch und vergrößert eine zweite Modifikation für eine Airbagvorrichtung teilweise geschnitten,
- Fig. 15 und 16: schematisch ein sechstes Beispiel einer Airbagvorrichtung vor (Fig. 15) und vor/nach (Fig. 16) einer Auslösung in einer Schnittansicht,
- Fig. 17: schematisch und vergrößert eine dritte Modifikation für eine Airbagvorrichtung in einer Draufsicht,
- Fig. 18: schematisch und vergrößert eine vierte Modifikation für eine Airbagvorrichtung in einer Schnittansicht,
- Fig. 19: schematisch und vergrößert eine fünfte Modifikation für eine Airbagvorrichtung in einer Schnittansicht,
- Fig. 20: schematisch und vergrößert eine sechste Modifikation für eine Airbagvorrichtung in einer Schnittansicht,
- Fig. 21 und 22: schematisch und vergrößert eine siebte Modifikation für eine Airbagvorrichtung vor (Fig. 21) und nach (Fig. 22) einer Auslösung in einer Draufsicht,
- Fig. 23: schematisch und vergrößert eine achte Modifikation für eine Airbagvorrichtung in einer Draufsicht,
- Fig. 24 und 25: schematisch ein sechstes bzw. ein siebtes Beispiel einer Airbagvorrichtung mit einer Modifikation gemäß der Variante in der Fig. 23 in Schnittansichten,
- Fig. 26: in einer Draufsicht schematisch ein Detail der achten Modifikation gemäß der Fig. 23,
- Fig. 27: eine weitere Variante der achten Modifikation für eine Airbagvorrichtung gemäß Fig. 23 in einer Draufsicht,
- Fig. 28 und 29: schematisch ein achtes bzw. ein neunte Beispiel einer Airbagvorrichtung mit einer Modifikation gemäß der Variante in der Fig. 27 in Schnittansichten.
- Fig. 30: noch eine weitere Variante der achten Modifikation für eine Airbagvorrichtung gemäß Fig. 23 in einer Draufsicht,
- Fig. 31 und 32: schematisch ein zehntes Beispiel einer Airbagvorrichtung vor (Fig. 31) und nach (Fig. 32) einer Auslösung in einer Schnittansicht.
- Fig. 33 und 34: schematisch eine Variante des zehnten Beispiels einer Airbagvorrichtung vor (Fig. 33) und nach (Fig. 34) einer Auslösung in einer Schnittansicht, und
- Fig. 35: ein elftes Beispiel einer Airbagvorrichtung vor und (gestrichelt) nach einer Auslösung in einer Schnittansicht.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Einzelne Merkmale, die im Zusammenhang mit konkreten Beispielen angeben und/oder dargestellt sind, sind nicht auf diese Beispiele oder die Kombination mit den übrigen Merkmalen dieser Beispiele beschränkt, sondern können im Rahmen des technisch Möglichen, mit jeglichen anderen Varianten, auch wenn sie in den vorliegenden Unterlagen nicht gesondert behandelt sind, kombiniert werden.

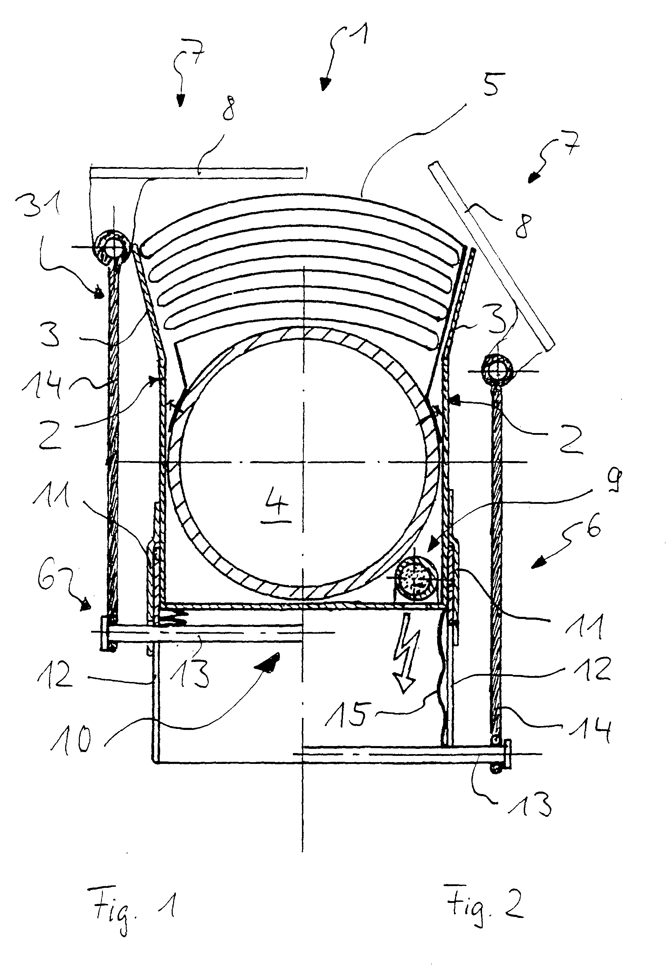

In den Fig. 1 und 2 ist in einem Schnittbild eine erste Ausführungsform einer Airbagvorrichtung 1 mit einem Airbagmodul 2 gezeigt, das ein Modulgehäuse 3 aufweist, in dem ein Airbag-Gasgenerator 4, ein Gassack oder Airbag 5 und darunter liegenden Mechanikeinrichtungen 6 (zumindest teilweise) untergebracht sind, die einen Öffnungsmechanismus für Abdeckeinrichtungen 7 in Form von Airbagklappen 8 darstellen. Ferner ist ein separater Antriebs-Gasgenerator 9, der beispielsweise durch eine pyrotechnische Patrone gebildet ist und zusammen mit dem Airbag-Gasgenerator 4 zu Gaserzeugungseinrichtungen 10 gehört, Gas gegen eine in Führungen 11 beweglich gelagerte Wanne 12, die Bestandteil der Mechanikeinrichtungen 6 sind. Die Wanne 12 könnte auch aus dem Airbag-Gasgenerator 4 mit Gas versorgt werden, das dazu dann aus einem geeigneten Loch (nicht gezeigt) daraus ausströmen würde. Unter der Wanne 12, die wie ein aus dem Antriebs-Gasgenerator 9 mit Gas beaufschlagbarer Kolben funktioniert, sind Mitnehmer 13 angebracht, an denen Zugseile 14 für die Übertragung der Kräfte an die Airbagklappen 8 angebracht sind. Die Wanne 12 ist vorzugsweise mit einer beidseitig befestigte Membrandichtung 15 gegen Gasaustritt abgedichtet. Die Fig. 1 zeigt die Wanne 12 vor und die Fig. 2 zeigt die Wanne 12 nach einem Unfall mit Auslösung der Airbagvorrichtung 1.

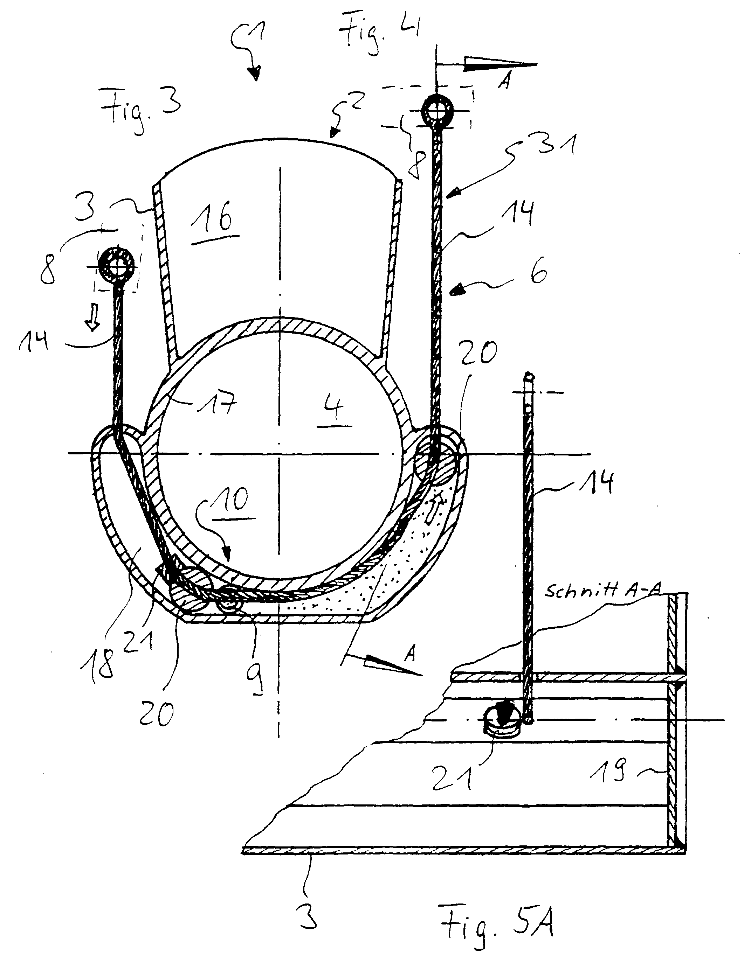

In einer Weiterbildung davon, die in den Fig. 3 bis 5 gezeigt ist, ist das Modulgehäuse 3 vorteilhafterweise aus Strangpreßprofil hergestellt. Ein Airbag-Aufnahmeraum 16, Ein Generatorgehäuse 17 und ein Antriebs-Druckraum 1.8 bilden eine Einheit, die stirnseitig mit Deckeln 19 verschlossen wird. In dem Druckraum liegen stabförmige Kolben 20. Durch diese werden wechselweise die Zugseile 14 hindurchgezogen und entsprechend mittels Seilkauschen 21 befestigt. Die Fig. 3 zeigt die Ausgangslage dieser Kolben 20. Bei einem Crash und damit einer Auslösung der Airbagvorrichtung 1 schiebt der durch die pyrotechnische Patrone des Antriebs-Gasgenerators 9 erzeugte Gasdruck die Kolben 20, die jeweils die Form einer Stange haben, in ihre Endlage, die in der Fig. 4 gezeigt ist. Hierbei nimmt ein Kolben 20 zwei Zugseile 14 einer Seite, d.h. einer Airbagklappe 8 mit, während die anderen zwei Zugseile 14 für die andere Seite, d.h. die andere Airbagklappe 8, durch ihn hindurch rutschen. Die Fig. 5A zeigt eine Einzelheit dieser Ausführung in Form der Anbindung eines der Zugseile 14 an einen Kolben 20.

Auch bei dieser vorstehend unter Bezugnahme auf die Fig. 3, 4 und 5A beschriebenen Version kann die Bewegung der/des Kolben(s) 20 mit Gasdruck aus dem Airbag-Gasgenerator 4 bewirkt werden.

Eine weitere Möglichkeit der Ausführung der vorstehend beschriebenen und anderer Versionen ist z.B. die Betätigung nur einer Airbagklappe 8 mit nur einem Kolben 20 und zwei Zugseilen 14.

Da der/die Kolben 20 durch unterschiedliche Losreißkräfte zum Kippen neigt/neigen und hierdurch verklemmen könnte(n), wird, gemäß der Erfindung ein, wie in den Fig. 5B und 5C gezeigt, als zahnradartige Walze 22 ausgebildeter Kolben 20 eingesetzt werden, der sich bei seiner Bewegung aus einer Ausgangs- in eine Endlage um seine Kolbenachse 23 dreht und dabei an einer Verzahnung 24 am aus einem Strangpreßprofil gebildeten Modulgehäuse 3 innerhalb des Antriebs-Druckraums 18 abläuft. Diese Verzahnung 24 zwingt den Kolben 20 in einen gleichmäßigen, d.h. nicht kippenden Lauf. Zur Anbindung der Zugseile 14 sind an den Enden der Kolbenachse 23 Hülsen 25 befestigt, die ebenso wie die dazwischen liegende verzahnte Walze 22 des Kolbens 20 im Gehäuse 3, oder genauer im Antriebs-Druckraum 18, formschlüssig abdichten. Der Kolben 20 wird in diesem Beispiel durch Gas aus dem Airbag-Gasgenerator 4 beaufschlagt. Nachdem der Kolben 20 über die Zugseile 14 die Airbagklappe(n) (nicht gezeigt) geöffnet hat, hat der Kolben 20 auch die Stelle erreicht, an der Gasdurchströmlöcher 26 für den Airbag 5 geöffnet werden. Diese Art der Beaufschlagung einerseits der Mechanikeinrichtungen 6 und andererseits danach des Airbags 5 mit Gas aus demselben Gasgenerator, nämlich dem Airbag-Gasgenerator 4, der in diesem Fall alleine die Gaserzeugungseinrichtungen 10 bildet, da kein gesonderter Antriebs-Gasgenerator vorhanden oder erforderlich ist, ist als eine eine Ausführungsform einer Gaszwangssteuerung: Ein Kolbensystem öffnet die Klappe und öffnet danach durch seinen Weg den Zugang des Gases in den Airbag. Die Fig. 5B und 5C zeigen ein Beispiel dieser Ausführung mit einem Kolben 20 im Längs- und Querschnitt.

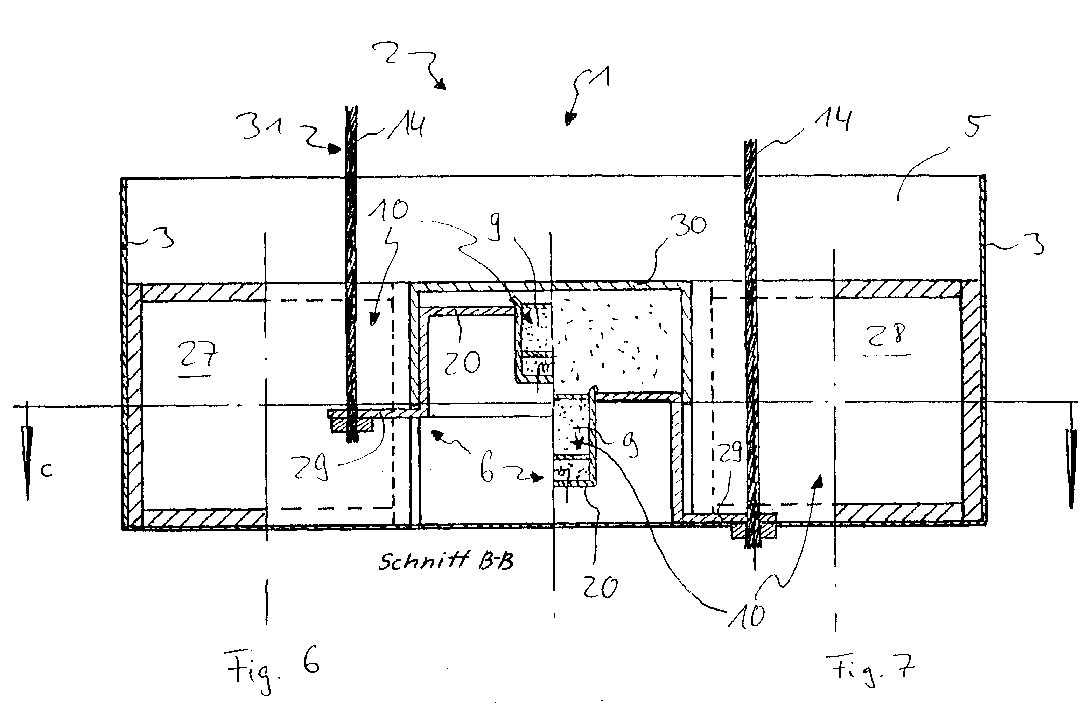

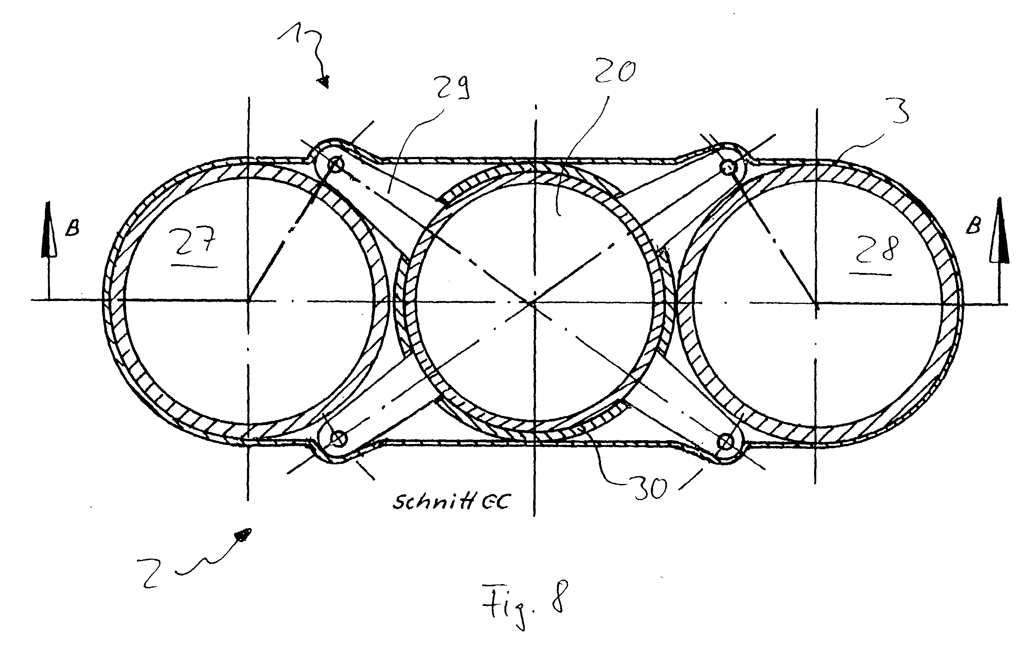

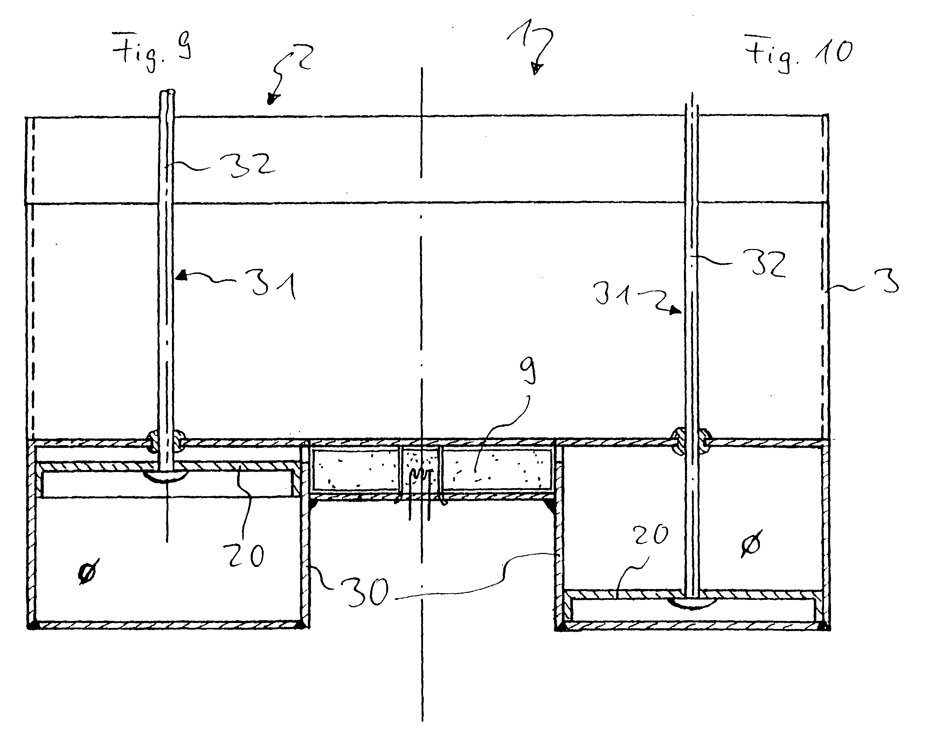

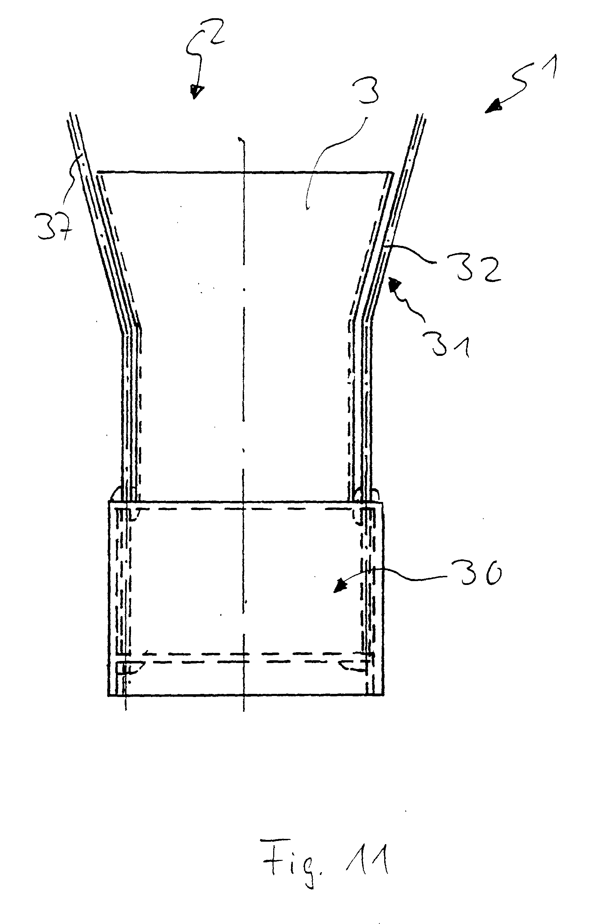

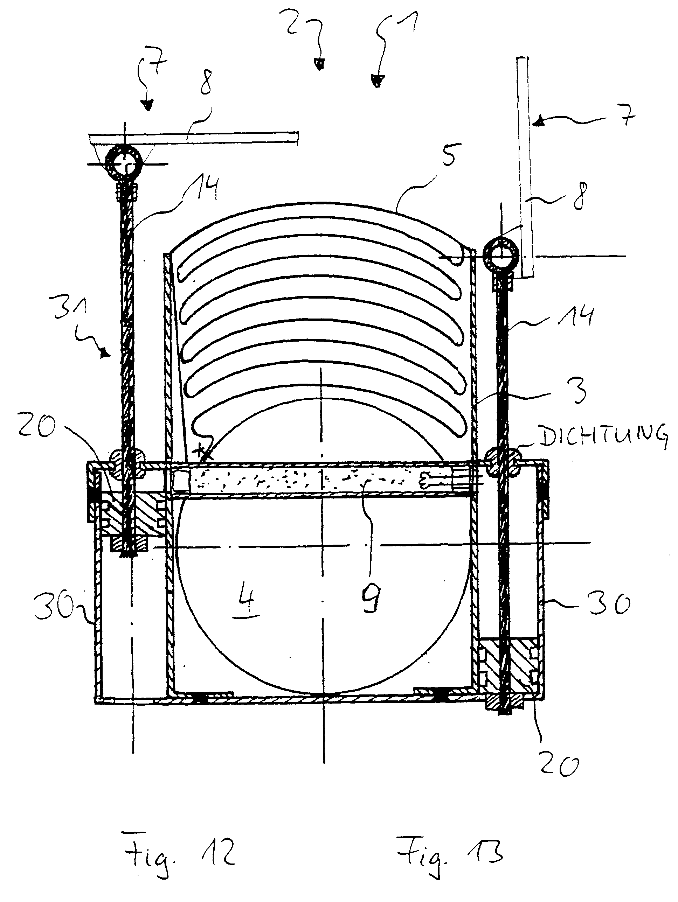

Die Fig. 6 bis 8 zeigen eine weitere Alternative der Airbagvorrichtung 1: Der Kolben 20 zum Ziehen der vier Zugseile 14 ist in der Mitte des Airbagmoduls 2 zwischen z.B. einer 1. und einer 2. Generatorstufe 27 bzw. 28 gelagert. Die Fig. 6 zeigt die Ausgangsstellung, die Fig. 7 zeigt die Kolbenlage nach einem Crash, d.h. einer Auslösung der Airbagvorrichtung 1, und die Fig. 8 zeigt im Mittelschnitt den Kolben 20 mit Auslegern 29, an denen die Zugseile 14 befestigt sind.

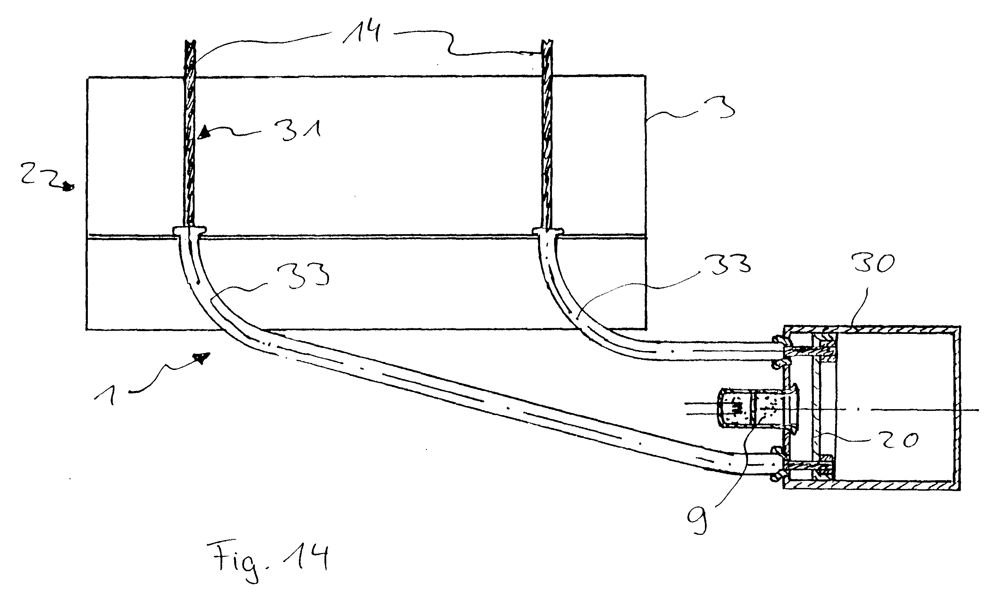

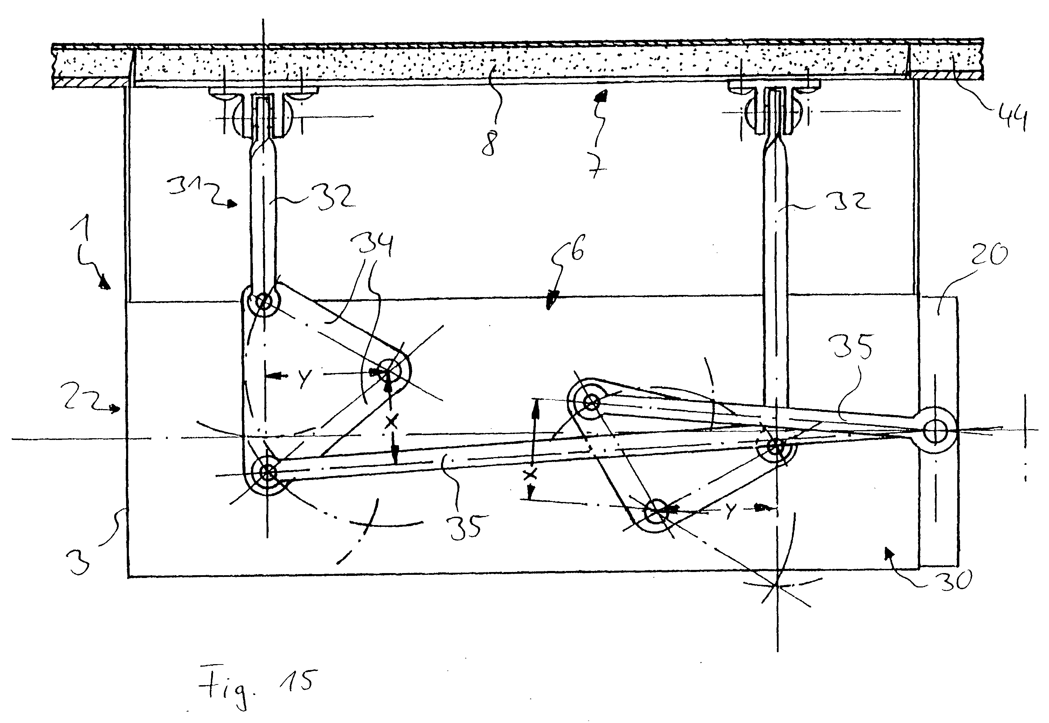

Die Fig. 9 und 10 zeigen eine weitere Alternative, bei der z.B. zwei Kolben 20 in Zylindern 30 unter einem herkömmlichen Airbagmodul 2 befestigt sind. Beide Zylinder 30 werden durch eine gemeinsame pyrotechnische Patrone des separaten Antriebs-Gasgenerators 9 gefüllt. Diese Anordnung läßt als statt der Zugseile der vorher behandelten Ausführungen Zugelemente 31 in Form von Stangen 32 zu. Die Stangen 32 müssen abgedichtet werden. Die Fig. 9 zeigt die Ausgangsstellung, und die Fig. 10 zeigt die Stellung nach einem Crash, d.h. einer Auslösung der Airbagvorrichtung 1.

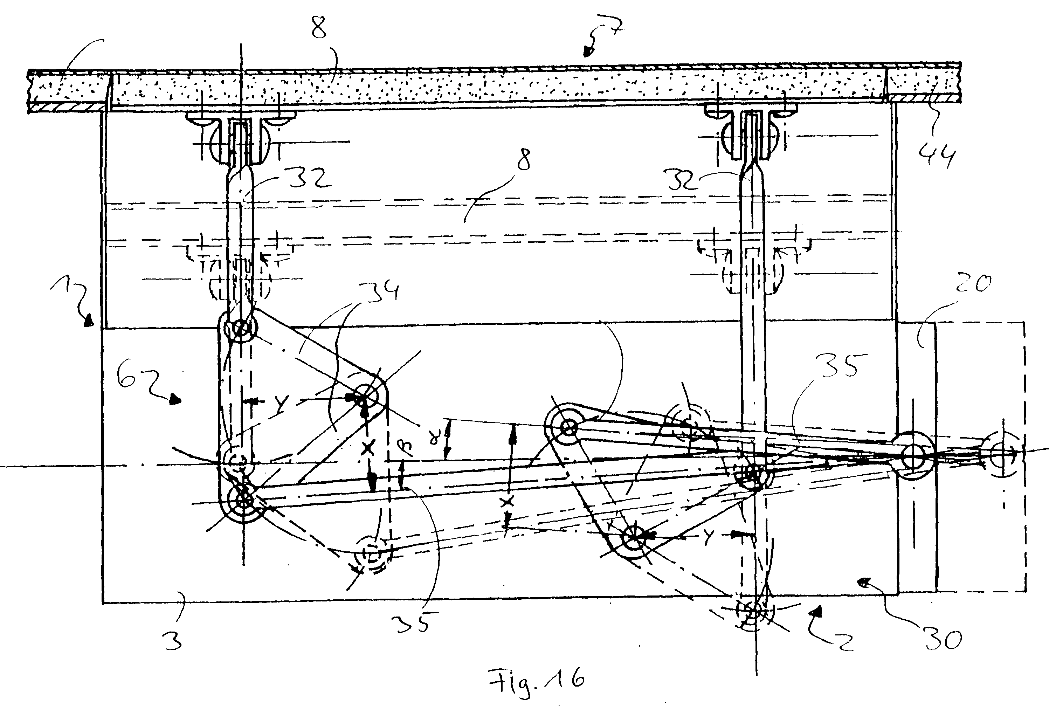

Die Fig. 11 zeigt über das Airbagmodul 2 seitlich überstehende Zylinder 30, durch deren obere Abdeckung geradlinig Zugstangen 32 durchgeführt werden können. Diese Ausführung kann kostengünstiger als umgelenkte Seile realisiert werden.

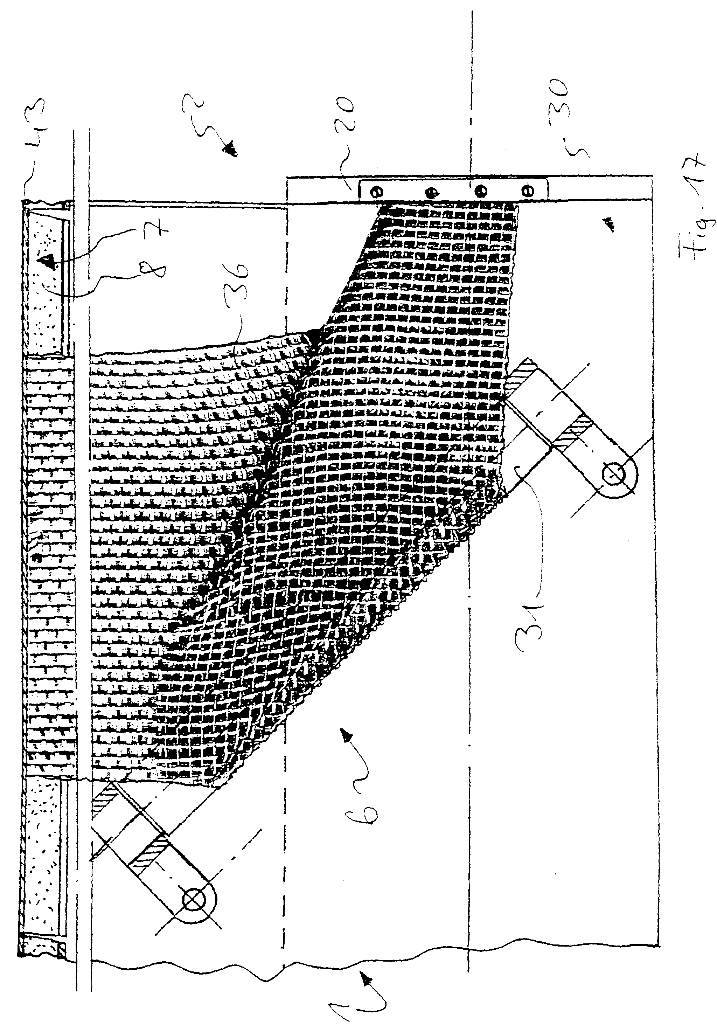

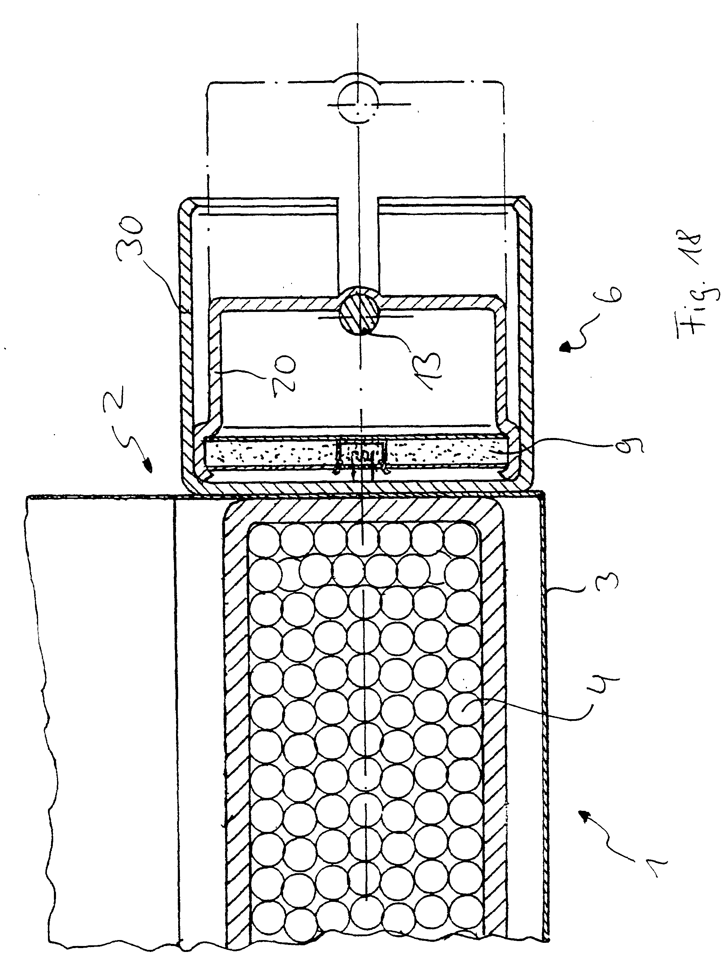

Die Fig. 12 und 13 zeigen an ein Airbagmodul 2 seitlich angehängte Zylinder 30, vorzugsweise entlang der gesamten Länge des Airbagmoduls 2. In diesen Zylindern 30 sind stangenförmige Kolben 20 gelagert, an denen die Zugseile 14 befestigt sind. Auch hier ist es möglich, beide Zylinder von einer dazwischen installierten pyrotechnischen Patrone als Antriebs-Gasgenerator 9 mit Gas zu beaufschlagen. Das Gas könnte aber auch vom Airbag-Gasgenerator 4 entnommen werden. Die Fig. 12 zeigt die Ausgangsstellung, und die Fig. 13 zeigt die Stellung nach einem Crash, d.h. einer Auslösung der Airbagvorrichtung 1.

Die Fig. 14 zeigen bei Packageproblemen eine Anordnung, bei der die Zugseile 14 Teil eines z.B. insgesamt 4-fach-Bowdenzugsystemes (2 Bowdenzüge 33 für je eine Airbagklappe (nicht gezeigt)) sind. Hierbei kann dann der Zylinder 30 an einer beliebigen Stelle bezüglich des Airbagmoduls 2 beispielsweise hinter einer Fahrzeuginnenverkleidung (nicht gezeigt) angebracht werden.

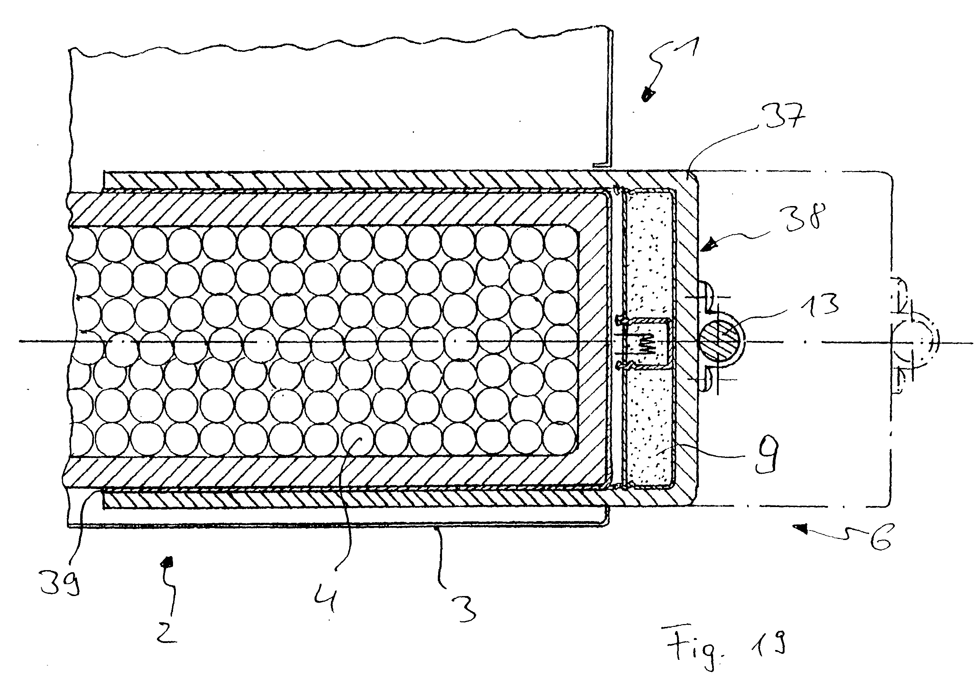

Die Fig. 15 und 16 zeigen insbesondere eine Öffnunasmechanik der Mechanikeinrichtungen 6 über vier Zugstangen 32, die an Umlenkhebeln 34 befestigt sind. An den Umlenkhebeln 34 greifen wiederum Antriebszugstangen 35 an. Die Antriebszugstangen 35 sind an vorher beschriebenen Kolben 20 befestigt. Die Besonderheiten dieser Alternative der vorliegenden Erfindung sind:
1. Die Umlenkhebel 34 können geometrisch so angeordnet sein, daß alle Kräfte einfach zu handhabende Zugkräfte sind.
2. Die Umlenkhebel 34 können so ausgelegt sein, daß mit ihnen eine vorteilhafte Übersetzung x/y machbar ist, d.h. ein kräftiger Zylinder 30 kann mit relativ kurzem Hub den erforderlichen Hub für unterschiedliche Airbagklappen 8 ausführen. In der Praxis bedeutet das, daß unterschiedliche Armaturentafeln durch spezifische Umlenkhebel 34 mit dem gleichen Grundmodul bzw. dessen Kolben 20 und Kolbenhub ausgestattet werden können.
3. Weiter können die Umlenkhebel 34 derart am Airbagmodul 2 befestigt sein, daß die Umlenkhebel 34 in ihrer Zugrichtung um gleiche Winkel a/b von der Mittelachse abweichen - auch während der Bewegung (s. z.B. Fig. 16). In der Praxis bedeutet das, trotz schräg stehender Zugstangen 32 praktisch seitenkräftefreie Kolben 20.

Die Fig. 16 zeigt außer der Ausgangsstellung der Mechanik, wie in der Fig. 15, auch deren Endstellung.

Die Fig. 17 zeigt eine weitere Alternative zur Umleitung der Zugkraft von einem rechtwinklig zu einer Airbagklappe 8 positionierten Zylinder 30 der Mechanikeinrichtungen 6 zu dieser Airbagklappe 8. In früheren, eingangs angegebenen Schutzrechtsanmeldungen der vorliegenden Anmelderin wurde gezeigt, daß bei einziehbaren Airbagdeckeln oder -klappen 8 eine Außenhaut (nicht gezeigt) einer Fahrzeuginnenverkleidung (nicht gezeigt) mit aufgeklebtem oder eingelegtem Gewebe 36 versehen werden kann, um ein "Aufspleißen" der Airbagklappe 8 zu verhindern. Dieses Gewebe 36 in ausreichender Länge wird um eine in Winkel von z.B. 45 Grad zur Airbagklappe angeordnete Stange oder Rolle als Zugelement 31 umgelegt und hat dann die gewünschte Zugrichtung für den ziehenden Kolben (in der Fig. 17 nicht sichtbar). Das Gewebe 36 wird seitlich am Kolben befestigt. Selbstverständlich kann man auch anstelle des Gewebes einzelne Bänder, Zugseile o.a. Zugmittel verwenden.

Die Fig. 18 zeigt alternativ als Energiespender einen am Airbagmodul 8 angesetzten Zylinder 30 mit Kolben 20 und eigenem pyrotechnischem Antriebs-Gasgenerator. Es ist sichtbar, daß der Platzbedarf 2 x Hub plus Gehäusewandungen ist. Am Kolben 20 ist ein angepaßter Mitnehmer 13 angebracht. Das ist z.B. ein Bolzen für eine Mechanik entsprechend der Fig. 15. Wenn auch der Kostenaufwand für die Ausgestaltung gemäß der Fig. 18 höher als bei anderen insbesondere vorher und in den eingangs angegebenen früheren Anmeldungen der vorliegenden Anmelderin beschriebenen Varianten sind, so können doch andere Kriterien, wie Ansteuerung, Überwachung usw. durch eine Variante gemäß der Fig. 18 vorteilhaft erfüllt werden oder erfüllbar sein.

Die Fig. 19 zeigt eine Alternative, bei der eine Drucktasse 37 analog der Wanne 12 des ersten Ausführungsbeispiels (siehe auch Fig. 1 und 2) passend über den vorhandenen Airbag-Gasgenerator 4 gestülpt wird. Der Airbag-Gasgenerator 9 übernimmt die Funktion des Zylinders. Zwischen Airbag-Gasgenerator 4 und Drucktasse 37 wird in letzterer ein pyrotechnischer Antriebs-Gasgenerator 9 für die Airbagklappen 8 untergebracht. An der Drucktasse 37 ist am Kopf 38 entsprechend ein Mitnehmer 13 für die übrige Öffnungsmechanik der Mechanikeinrichtungen 6 befestigt. Zwischen dem Antriebs-Gasgenerator 9 und der Drucktasse 37 wird vorzugsweise eine Gleit- und Dichtzwischenlage 39 in Zylinder- oder Tassenform gelegt. Das Material ist erfindungsgemäß bei der Explosionstemperatur an der Vorderkante schmelzend zum Dichten ausgeführt. Ein z.B. anwendbares Material ist der Kunststoff POM. Die Variante gemäß der Fig. 19 ist kostengünstiger als die Ausführung, die in der Fig. 18 gezeigt ist.

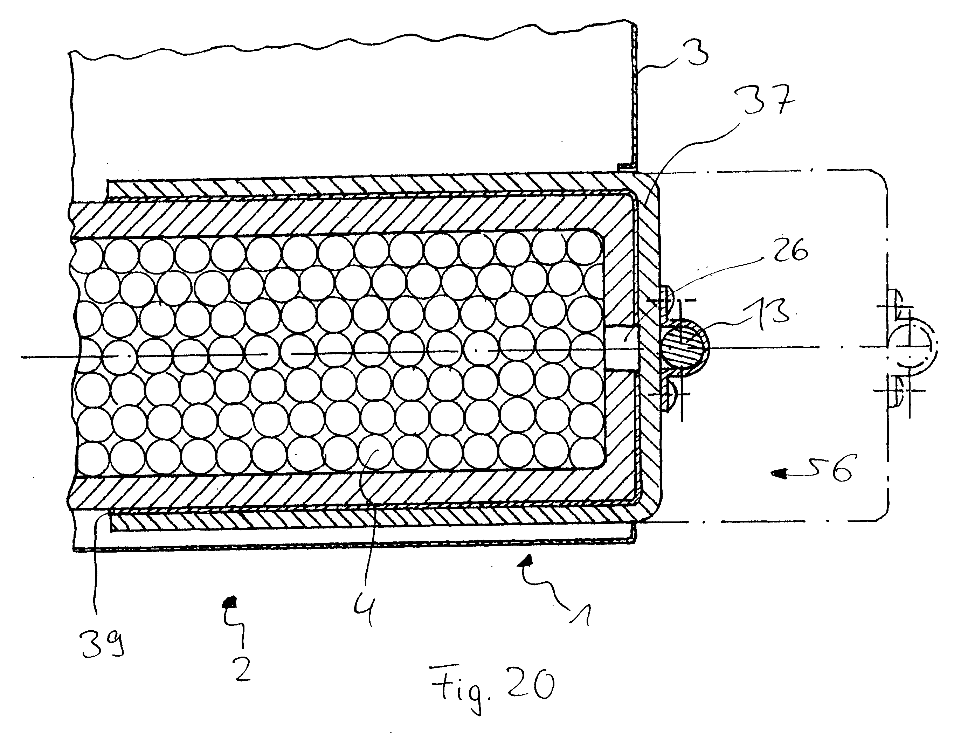

Die Alternative gemäß der Fig. 20 ist wie jene in der Fig. 19 aufgebaut, jedoch ohne gesonderten Antriebs-Gasgenerator 9 zur Klappenöffnung. Hier wird die Drucktasse 37 durch ein Gasdurchgangs- oder -durchströmloch 26 vom Airbag-Gasgenerator 4 versorgt. Das ist eine packagemäßig besonders günstige und gleichzeitig kostengünstige Lösung. Außerdem kann der Kolben 20 hier genutzt werden, mit seinem "Hemd" nach dem Öffnen der Airbagklappen 8 den Gaszugang zum Airbag 5 zu öffnen. Gegenüber den Ausführungen, die in den Fig. 18 und 19 gezeigt sind, ist die Variante gemäß der Fig. 20 die kostengünstigste. Bezüglich anderen Varianten, wie sie z.B. weiter vorne und in den eingangs angegebenen älteren Anmeldungen des vorliegenden Anmelders angegeben sind, läßt sich die Ausführung gemäß der Fig. 20 auch ohne jedenfalls wesentliche Mehrkosten realisieren.

Für die Ausführung gemäß der Fig. 20 gilt ferner:

Das Gas für den Klappenmechanismus ist < 1 % vom Airbaggas, nämlich z.B. 150 cm³ x 30 bar bei schwergängiger Klappe, entspricht 4.5 Liter, und z.B. 150 cm³ x 20 bar bei leichtgängiger Klappe, entspricht 3 Liter, also 1.5 Liter Unterschied. Ein Beifahrerairbag hat 90 l x 2 bar, also 180 Liter Gasinhalt. Davon sind 1.5 Liter nicht einmal 1 %.

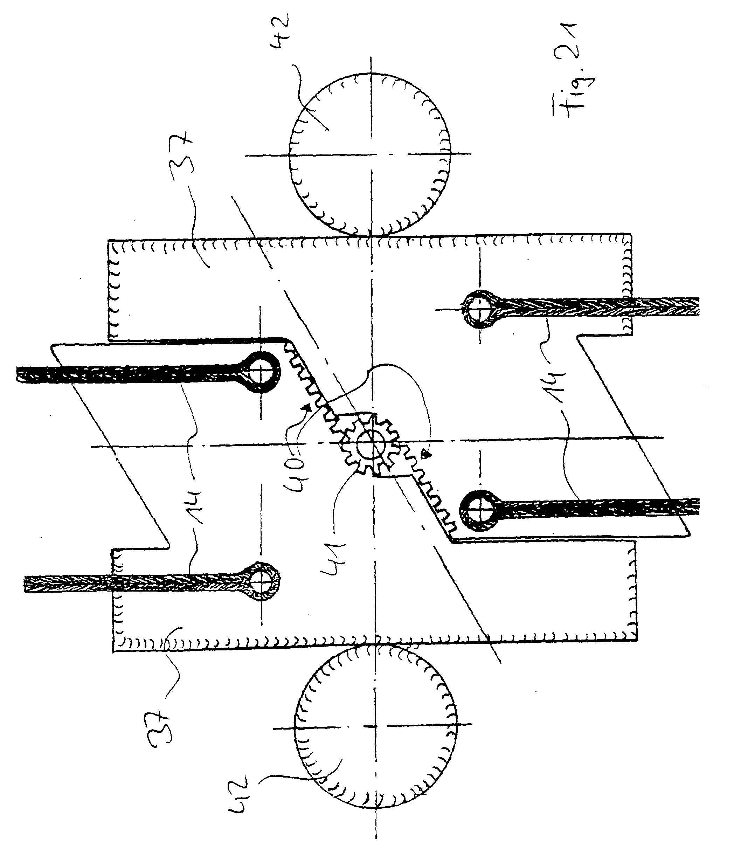

Die Fig. 21 zeigen zwei Drucktassen 37, die beidseitig über dem dazwischen liegenden Airbag-Gasgenerator 4 plaziert sind. Die Drucktassen 37 stecken derart mit schrägen Wänden 40 ineinander, daß sie sich bei der Voneinanderwegbewegung zwangsläufig drehen müssen. Damit beide Drucktassen 37 synchron laufen. ist zwischen deren schrägen Flächen oder Wänden 40, die als Zahnstange ausgebildet sind, ein ortsfestes (am Airbag-Gasgenerator 4 und/oder am Außengehäuse 3 des Airbagmoduls 2 befestigtes Zahnrad 41 plaziert. Diese Ausführung erzwingt eine Synchronbewegung der Drucktassen 37 in schraubenförmiger Art. An jeder Drucktasse 37 sind zwei Zugseile 14, die am anderen Ende mit den Airbagklappen (nicht gezeigt) verbunden sind, formschlüssig eingelegt. Da die Drucktassen 37 von innen formschlüssig mit dem Airbag-Gasgenerator 4 und außen formschlüssig mit einem z.B. runden Modulgehäuse 3 umschlossen sind, können die Zugseile 14 nicht "ausknöpfen". Beim Voneinanderweggehen öffnen die Drucktassen 37 automatisch einen Gasdurchgang (nicht gezeigt) vom Airbag-Gasgenerator 4 zum Airbag 5. Die Fig. 21 zeigt die "Abwicklung" der zylinderförmigen Drucktassen 37 mit ihren beiden Deckeln 42. Wie angegeben, werden Stanzbleche zu Fertigteilen gerollt und verschweißt.

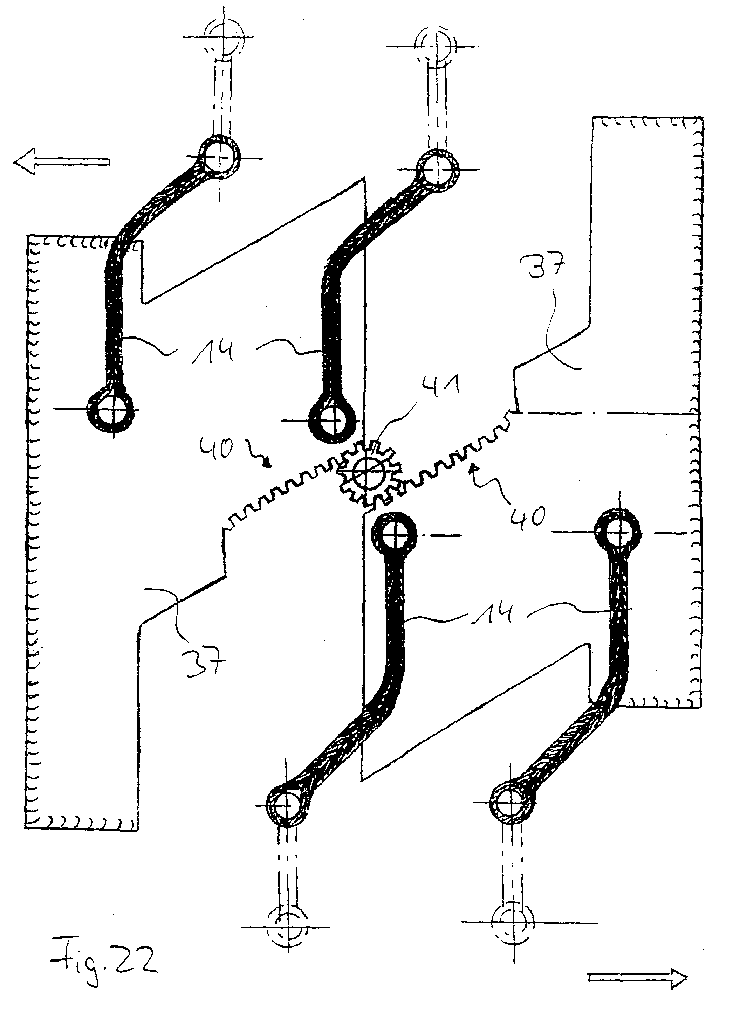

Die Fig. 22 zeigt, ebenfalls in abgewickelter Form, die Lage der Drucktassen 37 nach einem Crash. Sie haben "schraubenförmig" und gegenläufig die Zugseile 14, die an den Airbagdekkeln (nicht gezeigt) angebunden sind, nach unten und vom gezogen. Die Zugseile 14 verlassen die Drucktassen 37 tangential.

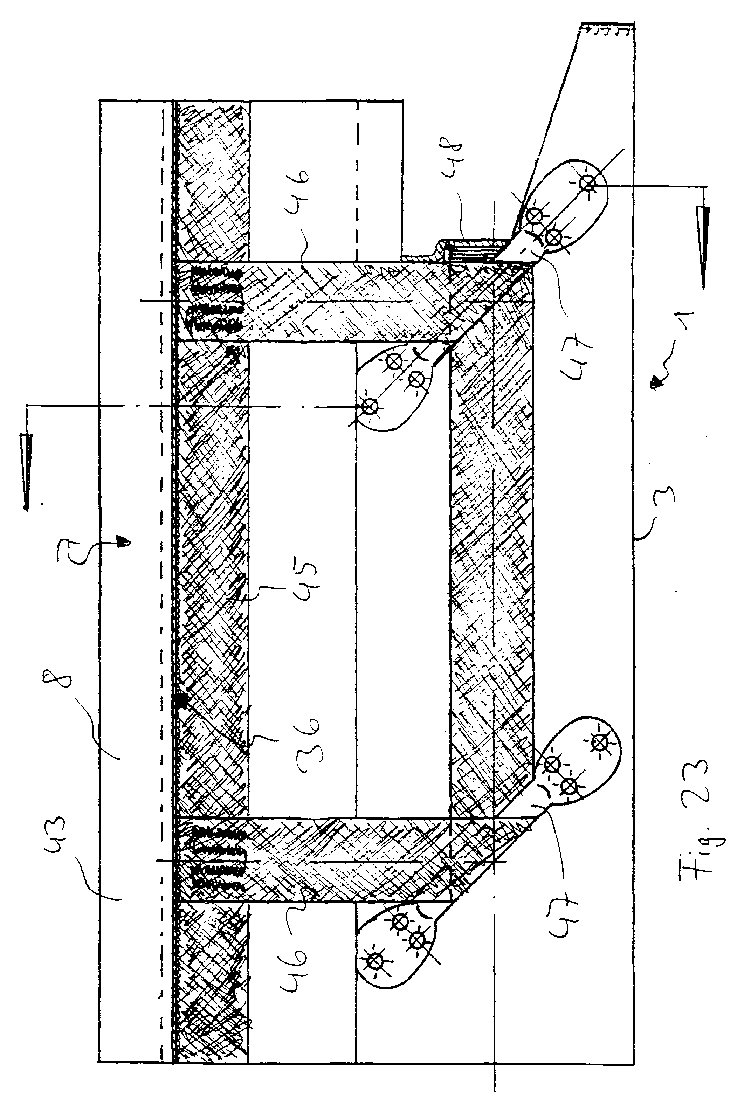

Die Fig. 23 bis 25 zeigen einen Airbeckdeckel oder eine Airbagklappe 8, dessen/deren Außenhaut 43 mit einem Gewebe 36 kranschlüssig mittels Kleber oder indem das Gewebe 36 in die Außenfolie oder -haut 43 der Armaturentafel 44 eingelegt ist, verbunden ist. An diesem Gewebe 36 ist rundum ein Band 45 kraftschlüssig angenäht. An diesem, die Zugkraft verteilendem Band 45 sind im rechten Winkel Zugbänder 46 angenäht, die um Umlenkbügel 47 jeweils um 90 Grad umgelenkt werden. Die Enden der Zugbänder 46 werden dann stirnseitig an einer Drucktasse 37 mittels z.B. einer Schelle 48 befestigt. Diese Drucktasse 37 ist über den Airbag- oder einen separaten Antriebs-Gasgenerator 4 bzw. 9 gestülpt und zieht nach der Auslösung des letzteren mit dem Gasdruck aus dem Generator oder von einer separaten Kartusche gespeist bei einem Crash die Zugbänder 46 , die an der Airbagklappe 8 befestigt sind, nach unten.

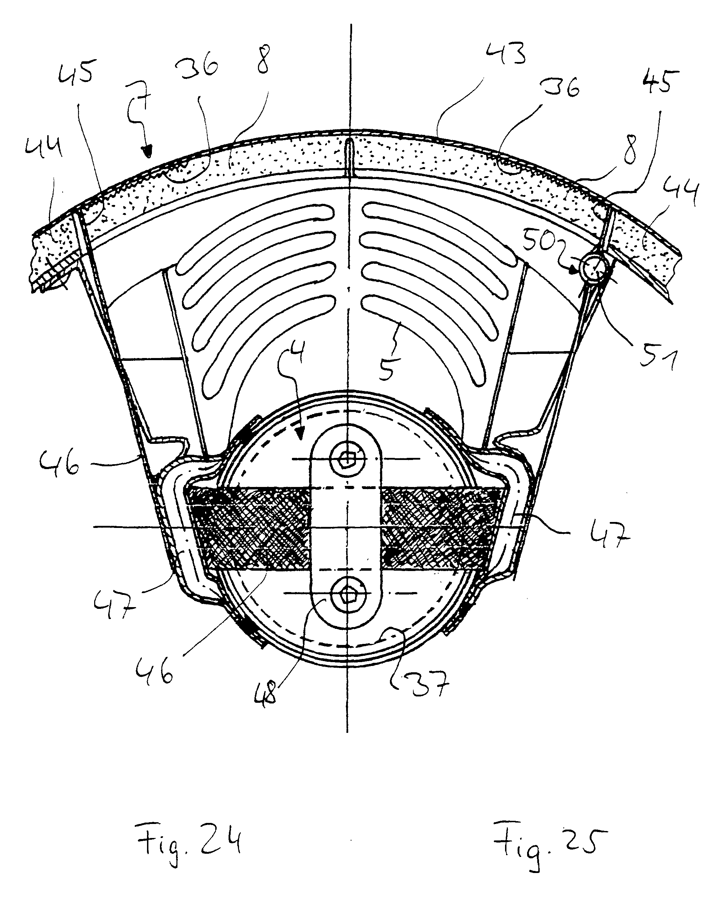

Die Fig. 24 zeigt die Frontansicht eines mit den vorstehenden Komponenten aufgebauten Airbagmoduls 2 mit den Umlenkbügeln 47 und der Schelle 48 zur Befestigung der Zugbänder 46, und die Fig. 25 zeigt die Frontansicht eines Airbagmoduls 2, bei dem die Zugbänder 46 mittels Schlaufen 50 und durchgesteckten Bolzen 51 mit den angenähten Bändern 45 am Airbeckdeckel 8 befestigt werden. Die Montage mittels Bolzen 51 vereinfacht die Montage des Airbagmoduls 2 an die Armaturentafel 44.

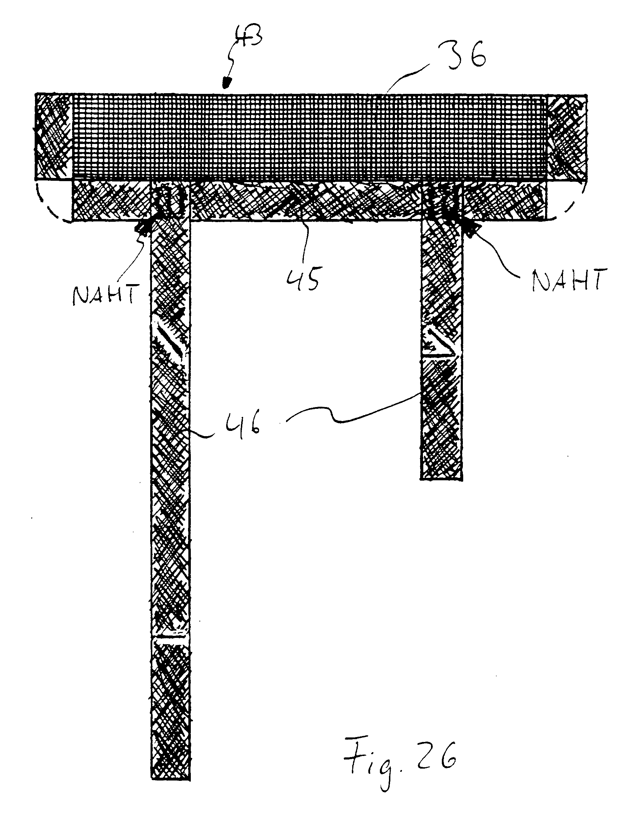

Die Fig. 26 zeigt das Gewebe 36, das an der Folie oder Außenhaut 43 des Airbagdeckels 8 kraftschlüssig angebunden ist. Der "Nähzusammenbau" zeigt weiter die angenähten Bänder 45 und Zugbänder 46 passender Länge und deren "Knickstellen" bei der Montage. Das Gewebe 36 mit den angenähten Zugbändern 46 und Bändern 45 wird Teil des Armaturentafel-Airbagdeckel-Zusammenbaus oder der entsprechenden Baugruppe. Nach der Montage des Airbagmoduls 2 am Armaturentafelkörper werden die Zugbänder 46 durch die Umlenkbügel 47 gesteckt und mittels z.B. einer Schelle 48 am Kopfende der Drucktasse 37 ohne "Lose" verschraubt (Fig. 23).

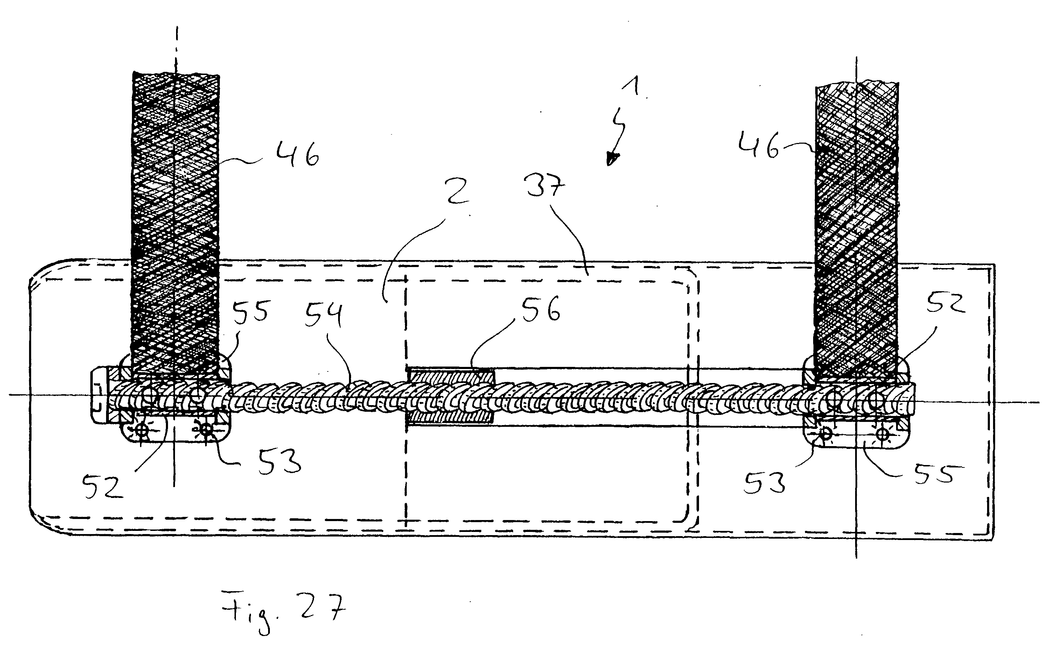

Eine weitere Alternative rückziehbare Airbagklappe mit einer Mechanik zum Ziehen der Zugbänder 46 ist in den Fig. 27 bis 29 gezeigt. Hier sind Zugbänder 46 mittels einer Klemmhülse 52 und Schrauben 53 an einer Gewindespindel 54 befestigt. Der Zusammenbau oder die Baugruppe ist in Lagerböcken 55 ortsfest drehbar gelagert. Die Lagerblöcke 55 sind am Modulgehäuse 2 befestigt. Bei einem Crash wird die Gewindespindel 54 (vorzugsweise mit Steilgewinde in reibungsarmer Ausführung, z.B. wie Trapezgewinde) durch eine Mutter 56 gedreht, die kraftschlüssig an der Drucktasse 37 befestigt ist. Bewegt sich die Drucktasse 37 (wie zuvor beschrieben), so wird zwangsweise die Gewindespindel 54 gedreht und werden die Zugbänder 46 aufgewickelt und werden damit die Airbagklappen 8 in das Airbagmodul gezogen.

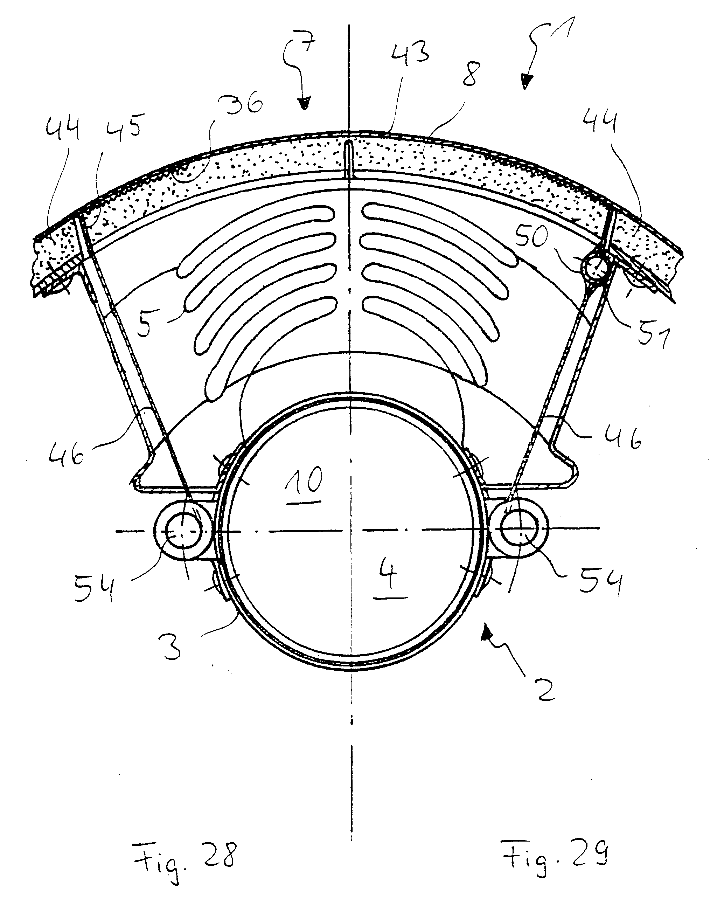

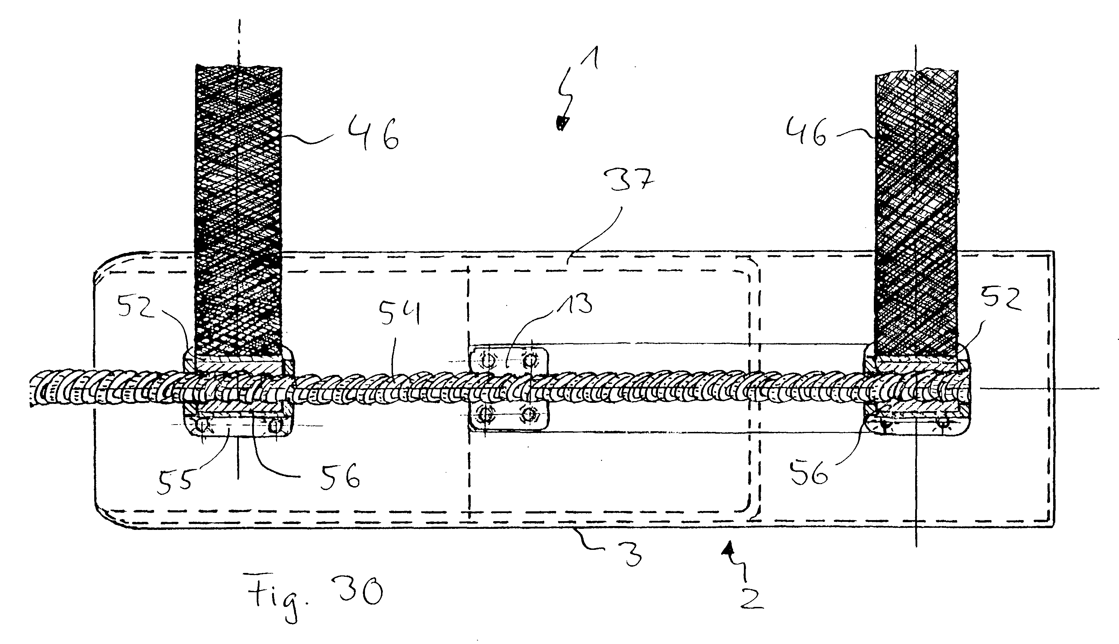

Die Fig. 28 zeigt den stirnseitigen Schnitt dieser Ausführung. Die Bänder 45 und Zugbänder 46 sind direkt an dem Gewebe 36 befestigt, das Teil der Airbagklappe 8 ist. Die Fig. 29 zeigt die Alternative des in der Fig. 28 dargestellten Schnittes mit Bolzenbefestigung der Bänder untereinander, wie in der Fig. 25. Die Fig. 30 zeigt eine ähnliche Alternative, wie in der Fig. 27 gezeigt ist. Hier ist jedoch die Gewindespindel 54 fest und nicht drehbar mit dem Mitnehmer 13 an der Drucktasse 37 befestigt. Die damit längs verfahrbare Gewindespindel 54 dreht Muttern 56, die jeweils in am Modulgehäuse 2 befestigten Lagerböcken 55 lagegesichert sind. Am Umfang der Muttern 56 sind die Zugbänder 46 mittels z.B. Klemmhülsen 52 befestigt. Bei axialer Bewegung der Gewindespindel 54 drehen sich die Muttern 56 und wickeln die Zugbänder 46 auf.

In den nachfolgend behandelten Figuren der Zeichnung sind noch weitere Ausführungsbeispiele im Zusammenhang mit anderen Airbags als Lenkrad- oder Beifahrerairbags in/hinter der Armaturentafel gezeigt.

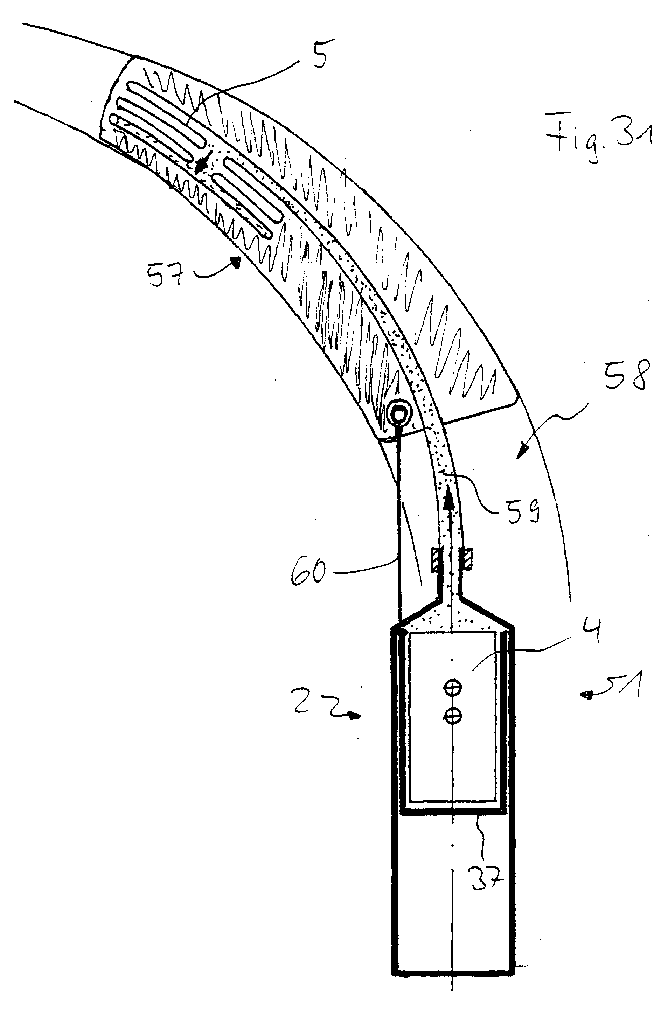

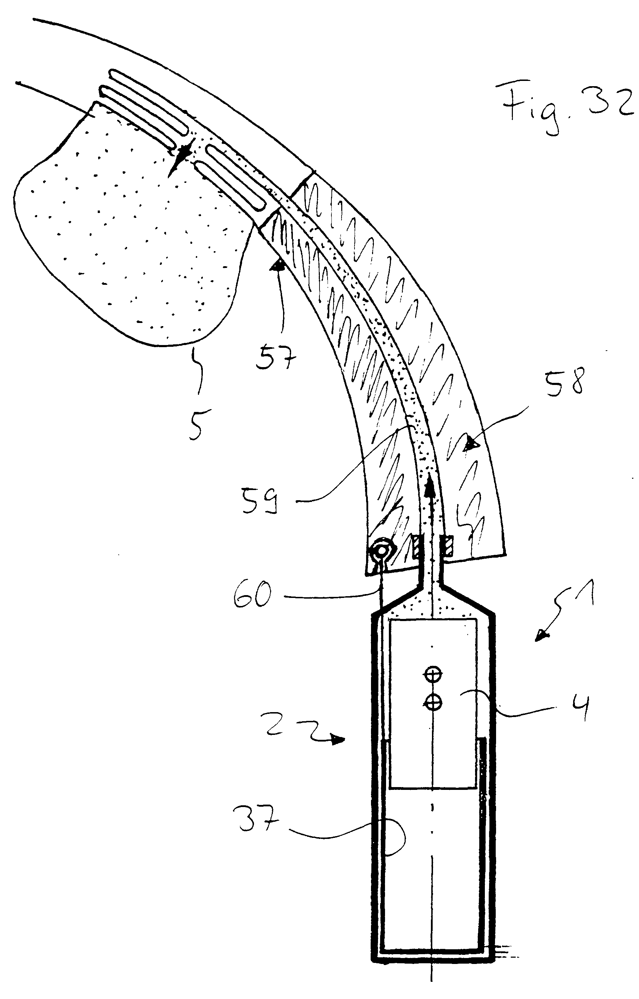

Die Fig. 31 und 32 zeigen einen Airbag 5 hinter einer Säulenverkleidung 57, im vorliegenden Fall der "A"-Säule 58 oben. Auch hier ist das gleiche Problem wie beim Armaturentafelairbag zu erwarten. Wenn der Airbag 5, bevor er sich entfalten kann oder darf, die Abdeckung oder Verkleidung 57 absprengen muß. muß er zuerst mit hohem Druck versorgt werden. Das macht ihn aggressiv und im Nahbereich für Personen gefährlich für Verletzungen oder Tod.

Bei der in den Fig. 31 und 32 gezeigten Ausführung der Erfindung wird entsprechend den technischen Möglichkeiten das Airbagmodul 2, d.h. u.a. der Airbag-Gasgenerator 4, an der "A"-Säule 58 unten befestigt. Über einen Schlauch 59 strömt bei einem Crash das Gas aus dem Airbag-Gasgenerator 4 in den Airbag 5. Bevor jedoch dies geschieht, muß das Gas zuerst eine Drucktasse 37 oder einen Hohlkolben bewegen, die bzw. der danach erst einen Weg für das Gas zum Befüllen des Airbags 5 freigibt (Zweitaktprinzip). Diese Drucktasse 37 ist mit einer Verbindung 60 (z.B. einem Seil oder Bowdenzug) mit der "A"-Säulen-Verkleidung 57 verbunden und zieht diese nach unten weg. Dadurch kann der Airbag 5 frei austreten (s. Fig. 32). Eine weiche Airbag-Faltung, bei der Schicht für Schicht des Airbags 5 aufgeblasen wird, kann in vorteilhafter Weise bei dieser, wie auch allen übrigen Ausführungen gemäß den vorliegenden Unterlagen die "Weichheit" des Systems unterstützt.

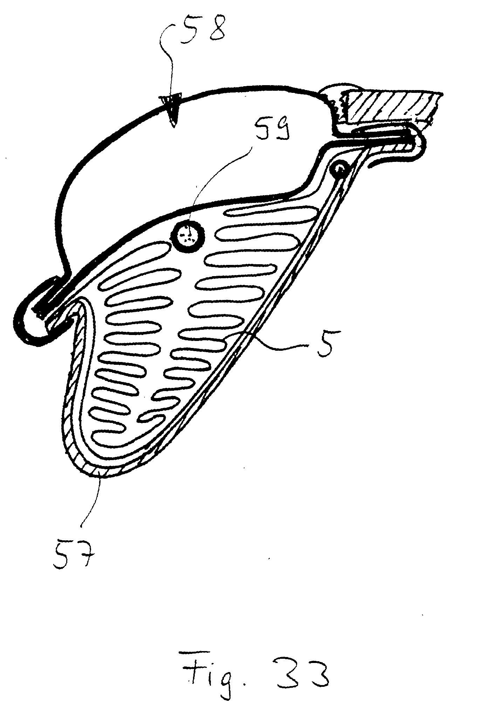

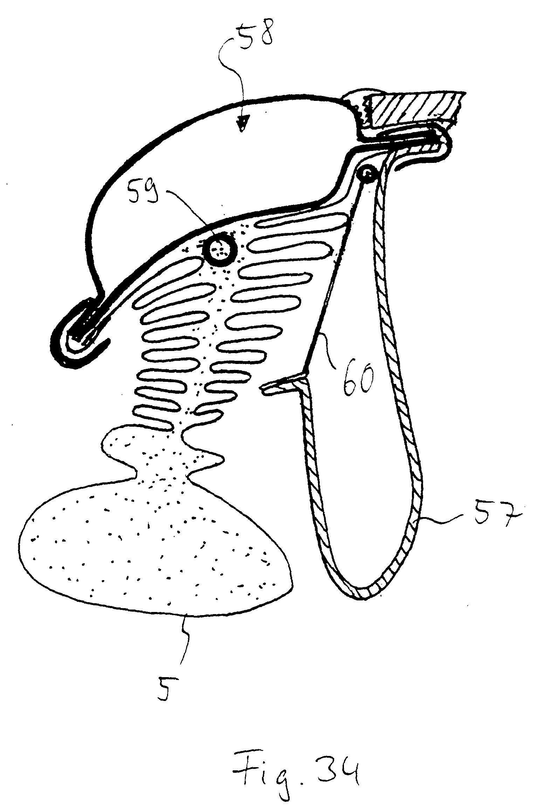

Die Fig. 33 und 34 zeigen einen "A"-Säulen-Querschnitt einer zur Variante gemäß den Fig. 31 und 32 ähnlichen Ausführungsform. In diesem Fall wird die Verkleidung "quer" weggezogen (s. Fig. 34).

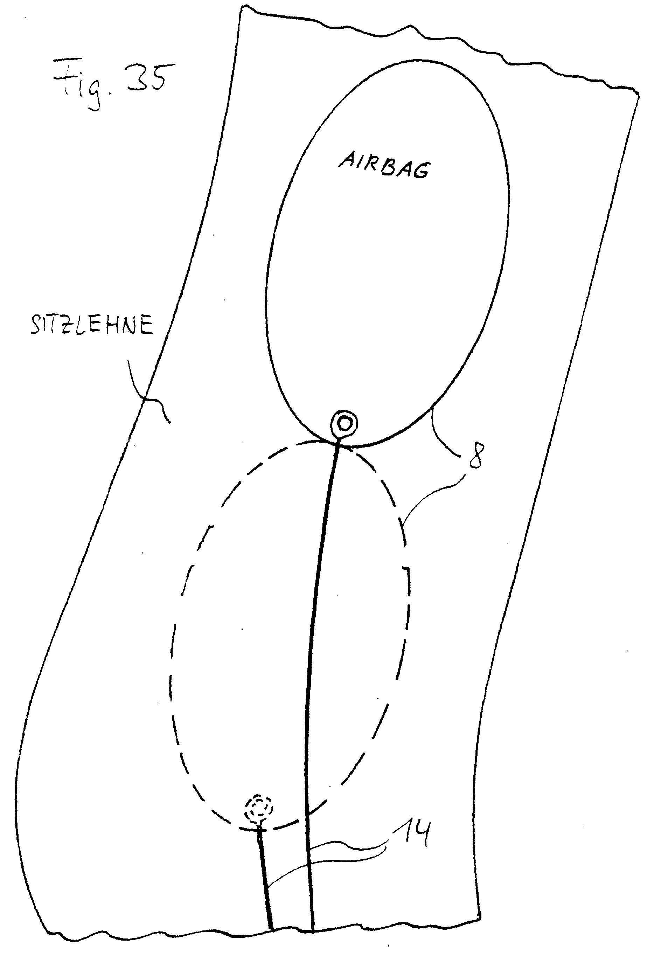

Die Fig. 35 zeigt die Realisierung der Erfindung bei einem in einem Sitz eingebauten Thoraxbag. Auch hier wird der Airbagdeckel 8 mittel z.B. eines Zugseils 14 vorab weggezogen.

Bei fast allen in den Figuren der Zeichnung gezeigten Alternativen sind die Airbagvorrichtungen mit einem separatem pyrotechnischen Gasgenerator zum Antrieb des entsprechenden Öffnungsmechnismus für die Airbagklappe bestückt. Selbstverständlich ist es auch möglich, den Airbag-Gasgenerator mittels entsprechend angeordnetem Gasdurchgangsloch oder -löchern zur Arbeit heranzuziehen, wie die insbesondere auch in den eingangs angegebenen älteren Anmeldungen des vorliegenden Anmelders ausführlich dargestellt wurde.

## Patentansprüche

1. Airbagvorrichtung mit wenigstens einer Abdeckeinrichtung (8), hinter der in einer Schließlage ein sich durch Gasfüllung ausbreitender Gassack (5) untergebracht ist und die zum Freigeben der Ausbreitung des Gassackes (5) mittels einer Steuerung aus der Schließlage in eine Offenlage bewegbar ist, wobei die Steuerung Gaserzeugungseinrichtungen (10) und Mechanikeinrichtungen (6) als Antriebsmittel für die Verstellung der Abdeckeinrichtung (7) aus der Schließlage in die Offenlage enthält, wobei die Mechanikeinrichtungen (6) wenigstens eine Antriebseinheit, die mit Gas aus den Gaserzeugungseinrichtungen (10) beaufschlagbar ist, für die Verstellung der Abdeckeinrichtung (7) aus der Schließlage in die Offenlage enthalten, und wobei jede Antriebseinheit einen Kolben (20) enthält,
**dadurch gekennzeichnet,**
**dass** der Kolben (20) als zahnradartige Walze (22) ausgebildet und innerhalb eines Antriebs-Druckraums (18) eine Verzahnung (24) vorgesehen ist, an der der Kolben (20) bei seiner Bewegung aus einer Ausgangs- in eine Endlage innerhalb des Antriebs-Druckraums (18) unter Drehung um seine Kolbenachse (23) abläuft.

2. Airbagvorrichtung nach Anspruch 1, **dadurch gekennzeichnet, dass** die Gaserzeugungseinrichtungen (10) einen Airbag-Gasgenerator (4) enthalten, und dass ein Airbagmodul (2) enthalten ist, das wenigstens den Airbag-Gasgenerator (4) und den Gassack (5) enthält.

3. Airbagvorrichtung nach Anspruch 2, **dadurch gekennzeichnet, dass** die wenigstens eine Abdeckeinrichtung (7) im Airbagmodul (2) integriert oder damit kombiniert ist oder Bestandteil einer Fahrzeuginnenverkleidung und an das Airbagmodul (2) angeschlossen ist.

4. Airbagvorrichtung nach Anspruch 2 oder 3, **dadurch gekennzeichnet, dass** das Airbagmodul (2) ein Gehäuse (3) enthält, das zumindest im wesentlichen aus einem Strangpreßprofil besteht.

5. Airbagvorrichtung nach Anspruch 4, **dadurch gekennzeichnet, dass** die Verzahnung (24) am aus einem Strangpreßprofil gebildeten Modulgehäuse (3) ausgebildet ist.

6. Airbagvorrichtung nach Anspruch 4 oder 5, **dadurch gekennzeichnet, dass** das aus einem Strangpreßprofil gebildeten Modulgehäuse (3) den Antriebs-Druckraum (18) enthält.

7. Airbagvorrichtung nach einem der vorhergehenden Ansprüche, **dadurch gekennzeichnet, dass** die Mechanikeinrichtungen (6) eine Zwangssteuerung zum koordinierten Antrieb mehrerer Abdeckeinrichtungen (8) enthalten.

8. Airbagvorrichtung nach einem der vorhergehenden Ansprüche, **dadurch gekennzeichnet, dass** die Mechanikeinrichtungen (6) zur Bewegungsübertragung Seile (14; 33), Gestänge (32; 34, 35) oder Gewebe (36; 45, 46) enthalten.

9. Airbagvorrichtung nach Anspruch 8, **dadurch gekennzeichnet, dass** zur Anbindung von Zugseilen (14) an den Enden der Kolbenachse (23) Hülsen (25) befestigt sind.

10. Airbagvorrichtung nach Anspruch 9, **dadurch gekennzeichnet, dass** die Hülsen (25) ebenso wie die dazwischen liegende verzahnte Walze (22) des Kolbens (20) im Antriebs-Druckraum (18) formschlüssig abdichten.

11. Airbagvorrichtung nach einem der vorhergehenden Ansprüche, **dadurch gekennzeichnet, dass** der Kolben (20) durch Gas aus dem Airbag-Gasgenerator (4) beaufschlagt wird.

12. Airbagvorrichtung nach Anspruch 11, **dadurch gekennzeichnet, dass** Gasdurchströmlöcher (26) für den Airbag (5) derart ausgestaltet und angeordnet sind, dass, nachdem der Kolben (20) ggf. über die Zugseile (14) die Abdeckeinrichtung (7) geöffnet hat, hat der Kolben (20) auch eine Stelle erreicht, an der Gasdurchströmlöcher (26) für den Airbag (5) geöffnet sind.

13. Airbagvorrichtung nach einem der Ansprüche 1 bis 10, **dadurch gekennzeichnet, dass** die Gaserzeugungseinrichtungen (10) einen Antriebs-Gasgenerator (9) enthalten, der mit den Mechanikeinrichtungen (6) verbunden ist.

14. Airbagvorrichtung nach Anspruch 13, **dadurch gekennzeichnet, dass** der Antriebs-Gasgenerator (9) separat vom Airbagmodul (2) ausgebildet und an oder getrennt von letzterem angeordnet ist.

## Claims

1. Airbag arrangement having at least one covering device (8), behind which in a closed position an airbag (5), expanding under gas inflation, is accommodated and which by means of a control can be moved from the closed position into an open position in order to allow expansion of the airbag (5), the control comprising gas generators (10) and mechanical devices (6) as drive means for displacement of the covering device (7) from the closed position into the open position, the mechanical devices (6) comprising at least one drive unit, on which gas from the gas generators (10) can impinge, for the displacement of the covering device (7) from the closed position into the open position, and each drive unit comprising a piston (20),
**characterized in that** the piston (20) takes the form of a toothed gear-like roller (22) and that a toothing (24) is provided inside a drive pressure chamber (18), on which toothing the piston (20), rotating about its piston axis (23), runs in its movement from a starting position into a final position inside the drive pressure chamber (18).

2. Airbag arrangement according to Claim 1, **characterized in that** the gas generators (10) comprise an airbag gas generator (4) and that an airbag module (2) is contained, which comprises at least the airbag gas generator (4) and the airbag (5).

3. Airbag arrangement according to Claim 2, **characterized in that** at least one covering device (7) is integrated in the airbag module (2) or is combined therewith or is an integral part of a vehicle interior trim and is connected to the airbag module (2).

4. Airbag arrangement according to Claim 2 or 3, **characterized in that** the airbag module (2) comprises a housing (3), which is at least substantially composed of an extruded profile.

5. Airbag arrangement according to Claim 4, **characterized in that** the toothing (24) is formed on the module housing (3) formed from an extruded profile.

6. Airbag arrangement according to Claim 4 or 5, **characterized in that** the module housing (3) formed from an extruded profile contains the drive pressure chamber (18).

7. Airbag arrangement according to any one of the preceding claims, **characterized in that** the mechanical devices (6) comprise a positive control for coordinated driving of multiple covering devices (8).

8. Airbag arrangement according to any one of the preceding claims, **characterized in that** the mechanical devices (6) comprise cables (14; 33), linkages (32; 34, 35) or woven fabrics (36; 45, 46) for transmitting motion.

9. Airbag arrangement according to Claim 8, **characterized in that** sleeves (25) are fixed to the ends of the piston axis (23) for the attachment of tensile cables (14).

10. Airbag arrangement according to Claim 9, **characterized in that** the sleeves (25), like the toothed roller (22) of the piston (20) situated between them, form a positively interlocking seal in the drive pressure chamber (18).

11. Airbag arrangement according to any one of the preceding claims, **characterized in that** the piston (20) is actuated by gas from the airbag gas generator (4).

12. Airbag arrangement according to Claim 11, **characterized in that** gas passages (26) for the airbag (5) are formed and arranged in such a way that once the piston (20), possibly by way of the tensile cables (14), has opened the covering device (7), the piston (20) will also have reached a position at which gas passages (26) for the airbag (5) are opened.

13. Airbag arrangement according to any one of Claims 1 to 10, **characterized in that** the gas generators (10) comprise a drive gas generator (9), which is connected to the mechanical devices (6).

14. Airbag arrangement according to Claim 13, **characterized in that** the drive gas generator (9) is formed separately from the airbag module (2) and is arranged on or separate from the latter.

## Revendications

1. Dispositif d'airbag avec au moins un dispositif de recouvrement (8) derrière lequel, dans une position de fermeture, est monté un sac de gaz (5) se déployant par remplissage de gaz et pouvant être déplacé au moyen d'une commande hors de la position de fermeture dans une position ouverte pour libérer le déploiement du sac de gaz (5), la commande comprenant des dispositifs de production de gaz (10) et des dispositifs mécaniques (6) servant de moyens d'entraînement pour le déplacement du dispositif d'airbag (7) de la position de fermeture dans la position ouverte, les dispositifs mécaniques (6) comprenant au moins une unité d'entraînement qui peut être sollicitée par du gaz provenant des dispositifs de production de gaz (10), pour le déplacement du dispositif de recouvrement (7) de la position de fermeture dans la position ouverte, et chaque unité d'entraînement comprenant un piston (20),
**caractérisé en ce que**
le piston (20) est réalisé sous forme de cylindre de type roue dentée (22) et l'on prévoit à l'intérieur d'une chambre de pression d'entraînement (18) une denture (24) sur laquelle le piston (20) roule par rotation autour de son axe de piston (23) lors de son déplacement d'une position de départ dans une position d'extrémité à l'intérieur de la chambre de pression d'entraînement (18).

2. Dispositif d'airbag selon la revendication 1, **caractérisé en ce que** les dispositifs de production de gaz (10) comprennent un générateur de gaz pour l'airbag (4) et **en ce qu'**un module d'airbag (2) est prévu, lequel contient au moins le générateur de gaz pour l'airbag (4) et le sac de gaz (5).

3. Dispositif d'airbag selon la revendication 2, **caractérisé en ce que** l'au moins un dispositif de recouvrement (7) est intégré dans le module d'airbag (2) ou est combiné à celui-ci ou fait partie d'un habillage intérieur du véhicule et est raccordé au module d'airbag (2).

4. Dispositif d'airbag selon la revendication 2 ou 3, **caractérisé en ce que** le module d'airbag (2) comprend un boîtier (3) qui se compose au moins essentiellement d'un profil filé.

5. Dispositif d'airbag selon la revendication 4, **caractérisé en ce que** la denture (24) est réalisée sur le boîtier de module (3) formé d'un profil filé.

6. Dispositif d'airbag selon la revendication 4 ou 5, **caractérisé en ce que** le boîtier de module (3) formé d'un profil filé comprend la chambre de pression d'entraînement (18).

7. Dispositif d'airbag selon l'une quelconque des revendications précédentes, **caractérisé en ce que** les dispositifs mécaniques (6) comprennent une commande forcée pour l'entraînement coordonné de plusieurs dispositifs de recouvrement (8).

8. Dispositif d'airbag selon l'une quelconque des revendications précédentes, **caractérisé en ce que** les dispositifs mécaniques (6) pour le transfert du mouvement comprennent des câbles (14 ; 33), des tringles (32 ; 34, 35) ou des tissus (36 ; 45, 46).

9. Dispositif d'airbag selon la revendication 8, **caractérisé en ce que** pour la liaison de câbles de traction (14) on fixe des douilles (25) aux extrémités de l'axe du piston (23).

10. Dispositif d'airbag selon la revendication 9, **caractérisé en ce que** les douilles (25) ainsi que le cylindre (22) denté du piston (20) situé entre elles réalisent une étanchéité par engagement par coopération de forme dans la chambre de pression d'entraînement (18).

11. Dispositif d'airbag selon l'une quelconque des revendications précédentes, **caractérisé en ce que** le piston (20) est sollicité par du gaz provenant du générateur de gaz pour l'airbag (4).

12. Dispositif d'airbag selon la revendication 11, **caractérisé en ce que** des trous de passage de gaz (26) pour l'airbag (5) sont configurés et disposés de telle sorte qu'après que le piston (20) a ouvert le dispositif de recouvrement (7), éventuellement par le biais des câbles de traction (14), le piston (20) a également atteint une position à laquelle des trous de passage de gaz (26) pour l'airbag (5) sont ouverts.

13. Dispositif d'airbag selon l'une quelconque des revendications 1 à 10, **caractérisé en ce que** les dispositifs de production de gaz (10) comprennent un générateur de gaz d'entraînement (9) qui est relié aux dispositifs mécaniques (6).

14. Dispositif d'airbag selon la revendication 13, **caractérisé en ce que** le générateur de gaz d'entraînement (9) est réalisé séparément du module d'airbag (2) et est disposé sur ce dernier ou de manière séparée de ce dernier.
